# EUROPEAN PATENT APPLICATION

(11) **EP 2 077 594 A1**
(43) Date of publication of application: **08.07.2009**
(21) Application number: 08172439.5
(22) Date of filing: 19.12.2008
(51) Int. Cl.: H01M 2/16

(54) **Composite separator films for lithium-ion batteries**

(30) Priority: 27.12.2007 CN 200710125717
(71) Applicant: Byd Company Limited, Guangdong Province Shenzhen 518118 (CN)
(72) Inventor: Wu, Hanhui, Shenzhen 518118 (CN); Liang, Shishuo, Shenzhen 518118 (CN)
(74) Representative: Epping - Hermann - Fischer

(57) **Abstract**

A composite separator film using polyethylene terephthalate (PET) substrate coated with an organic polymeric film to reduce apertures and pores disposed about the substrate. The organic polymeric film includes an organic polymeric material having high thermal stability and low shrinkage rate. The organic polymeric film can also include a plasticizer to distribute and render the apertures and pores more uniform. The resulting composite separator film can serve to divide the cathode and anode terminals of a lithium-ion battery with enhanced capacity and discharge rate at various current densities and temperatures.

## Description

### CROSS-REFERENCE TO PRIOR APPLICATIONS

This application claims priority to Chinese Patent Application No. 200710125717.9, filed December 27, 2007.

### FIELD OF THE INVENTION

The embodiments of the present invention relate to batteries, more specifically, to a composite separator film for lithium secondary batteries.

### BACKGROUND

A separator film is a critical component within a lithium-ion battery. The typical separator film is a thin, porous, insulating membrane having good ion conductivity and mechanical stability. The separator film should also be stable enough to withstand various chemicals and solvents for an extended period of time. When external shorts or internal disconnects within a cell core cause high current flow, the battery's internal temperature will rise to the melting point of the separator film thus effectively closing off any apertures or pores within the membrane thereby terminating the current flow and ensuring the safety of the battery. The characteristics and advantages of the separator film determine the battery's interface, internal resistance, and effectively influence the battery's capacity, charge/discharge cycling capabilities, charge/discharge current density, and various electrical properties. As such, the separator film plays an important role in the electrical performance of the lithium-ion battery.

For lithium-ion batteries that use liquid electrolytes, the separator film often require a single layer of polyethylene (PE) porous membrane subjected to heat-induced phase separation or mold stretching, to provide a single polypropylene (PP) porous membrane or a multi-layer PE/PP composite porous membrane. The separator film has apertures of about 0.5 micron and thickness of about 20 to 30 microns. They are able to terminate the circuit in the manner described above, thus minimize potential shorts and ensure safety of the battery. A multi-layer polypropylene/polyethylene/polypropylene (PP/PE/PP) composite separator film is able to provide a relatively low shutoff temperature of about 80 to 120 °C. However, one of the disadvantages of these types of organic polyolefin separator films is that it has a relatively low melting point of below 170 °C. Therefore, at temperatures greater than 150 °C the thermal stability of the film may be compromised. At the same time, the chemical stability within the lithium-ion battery core becomes lessened and the contact between the separator film and lithium or lithium-containing graphite can gradually reduce the polyolefin separator film. The reduction can lead to internal shorts, which can lead to increased temperature and increased shrinkage of the polyolefin separator film. Ultimately, the action cascades leading to more internal shorts and increased temperature.

For modem electronic devices, the requirements for lithium-ion batteries continue to rise. For example, electric bicycles, vehicles and power tools all need a large amount of current in a short amount of time for initiation purposes. To generate such high current capacity and current density without disrupting the high-voltage capability, the separator film must not only be thin, but the porosity must be higher than those in traditional lithium secondary batteries. Furthermore, the separator film must be thermally stable at high temperature in order to produce the stable, high-powered lithium-ion battery.

A single-layer polyethylene terephthalate (PET) membrane is thin and has high thermal stability with melting temperatures of about 256 to 265 °C. It also has good fluidity and is able to absorb electrolytes and improve battery cycling capabilities. But the membrane generally has large apertures or pores, about 5 to 15 microns, and has weak barrier properties making its safety performance and record suspect.

To address the shortcoming of the PET film, Degussa Co., Ltd. produced a separator film using a PET polymer-based material dipped in ceramic coating, the polymer-based material having alumina, titanium oxide, zirconium oxide and silicon oxide with special high-polymer mixture and non-woven fabrics. Nano-aluminum oxide and nano-titanium oxide were also incorporated as aperture materials. The nano-aluminum oxide can also serve as an anti-adhesion agent within the separator film, which allows the film to achieve a melting point greater than 250 °C with good thermal stability and improved large current discharge. The additives further lowered electrical resistance and increased the battery's performance at temperatures less than 0 °C. However, the brittle inorganic coating has poor adhesion to the flexible separator substrate. In the course of manufacturing the battery, the separator substrate is prone to bending and damages. Furthermore, the inorganic coating particles tend to shed thus rendering the safety of the batteries an issue. And because the coating film is a suspension, the coating process tends to be a challenge and is prone to non-uniform coatings or thickness variations thereby further affecting the battery's performance.

As such, there exists a need for a composite separator film and method of manufacturing the same for lithium-ion batteries that is easy to manufacture and provides enhanced electrical performance.

### SUMMARY

Accordingly, the presently disclosed invention utilizes a PET substrate coated with organic polymeric films to reduce the apertures and pores disposed about the surfaces of the PET substrate. Furthermore, a lithium-ion battery utilizing the presently disclosed composite PET substrate as a separator film is able to achieve high capacity and discharge rate even at low temperatures.

Thus, a first embodiment of the present invention discloses a composite separator film for lithium-ion batteries comprising: a polyethylene terephthalate substrate; and at least one layer of organic polymeric film disposed on the substrate, the organic polymeric film comprising at least one organic polymeric material capable of withstanding temperatures of at least about 170 °C, particularly temperatures between 170°C and 500 °C, with shrinkage rates of about 0 to 5 % upon raising the temperature above 170 °C, particularly upon raising the temperature to a temperature between 170 °C and 500 °C. The first layer of organic polymeric film is disposed on a top side of the substrate and a second layer of organic polymeric film is disposed on a bottom side of the substrate. The organic polymeric material can be selected from the group consisting of polypropylene (PP), polyethylene (PE), ethylene-vinyl acetate copolymer (EVA), polyvinyl alcohol (PVA), polyvinylpyrrolidone (PVP), polyvinylidene fluoride (PVDF), poly(vinylidene fluoride)-hexafluoropropene (PVDF-HFP), polymethyl methacrylate (PMMA), and mixtures thereof. The polyethylene terephthalate substrate has multiple apertures, the sizes of the apertures ranging from about 0.01 to 1.0 micron. The thickness of the organic polymeric film is about 0.2 to 10 microns while the thickness of the polyethylene terephthalate substrate is about 10 to 100 microns.

A second embodiment of the present invention discloses a method of forming a composite separator film for lithium-ion batteries, the method comprising: providing a polyethylene terephthalate substrate; applying a transparent solution on at least one surface of the substrate, the solution comprising an organic polymeric material dissolved in an organic solvent; and drying and cutting the substrate to provide the composite separator film. The amount of organic polymeric material within the transparent solution is about 1 to 20 % of the total weight of the solution. The organic solvent can be selected from the group consisting of butanone, butanol, acetone, acetic acid, tetrahydrofuran (THF), dimethylformamide (DMF), dimethylacetamide (DMAC), dimethyl sulfoxide (DMSO), hexamethyl phosphoramide (HMPA), N-methylpyrrolidone (NMP), triethyl phosphate (TEP), trimethyl phosphate (TMP), tetramethyl urea (TMU), and mixtures thereof. The solution can further include plasticizers, the ratio of plasticizer to organic polymeric material in the solution being about 2 : 1 to 2 : 5 (by weight), with the plasticizer being selected from the group consisting of dimethyl carbonate (DMC), diethyl carbonate (DEC), propylene carbonate (PC), butanediol, dibutyl phthalate (DBP), and mixtures thereof.

A third embodiment of the present invention discloses a lithium-ion battery comprising: a cathode terminal; an anode terminal; electrolytic solution; and a composite separator film for dividing the terminals, the film comprising: a polyethylene terephthalate substrate; and at least one layer of organic polymeric film disposed about the substrate, the organic polymeric film having at least one organic polymeric material capable of withstanding temperatures of at least about 170 °C, particularly temperatures between 170°C and 500 °C, with shrinkage rates of about 0 to 5 % upon raising the temperature above 170 °C, particularly upon raising the temperature to a temperature between 170 °C and 500 °C. The first layer of organic polymeric film is disposed on a top side of the substrate and a second layer of organic polymeric film is disposed on a bottom side of the substrate. The organic polymeric material can be selected from the group consisting of polypropylene (PP), polyethylene (PE), ethylene-vinyl acetate copolymer (EVA), polyvinyl alcohol (PVA), polyvinylpyrrolidone (PVP), polyvinylidene fluoride (PVDF), poly(vinylidene fluoride)-hexafluoropropene (PVDF-HFP), polymethyl methacrylate (PMMA), and mixtures thereof. The polyethylene terephthalate substrate has multiple apertures, the sizes of the apertures ranging from about 0.01 to 1.0 micron. The thickness of the organic polymeric film is about 0.2 to 10 microns while the thickness of the polyethylene terephthalate substrate is about 10 to 100 microns.

The presently disclosed embodiments utilize the thermal stability of PET film with melting points of about 256 to 265 °C by adding organic polymeric coatings on both sides of the film to control and uniformly distribute the pores sizes disposed about the film. The composite separator film can be used in a lithium-ion battery to achieve high capacity and current density in a short amount of time without interrupting the high-voltage requirements of a separator film. At the same time, the separator film has enhanced electrolytic absorption characteristics and can improve the battery's cycling performance.

The presently disclosed embodiments involve a simple process that is easy to replicate and produce. Lithium-ion batteries with the presently disclosed composite separator films have better thermal and electrical properties compared to traditional lithium-ion batteries. Furthermore, because the organic polymeric material is able to form stronger bonds, the separator films are less likely to bend or damage during production and the coatings are less likely to shed thus further ensuring the safety and performance of meeting the requirements of high-performing lithium-ion batteries.

Other variations, embodiments and features of the present invention will become evident from the following detailed description, drawings and claims.

### BRIEF DESCRIPTION OF THE DRAWINGS

Fig. 1 is a line graph illustrating the discharge capacity and discharge rates of Examples 1-5 and References 1-3 at room temperature under different discharge currents;

Fig. 2 is a line graph illustrating the discharge voltages and mid-value voltages of Examples 1-5 and References 1-3 at room temperature under different discharge currents;

Fig. 3 is a line graph illustrating the discharge capacity and discharge rates of Examples 1-5 and References 1-3 at - 20 °C under different discharge currents;

Fig. 4 is a line graph illustrating the discharge voltages and mid-value voltages of Examples 1-5 and References 1-3 at - 20 °C under different discharge currents;

Fig. 5 is a line graph illustrating the discharge capacity and discharge rates of Examples 1-5 and References 1-3 at - 10 °C under different discharge currents; and

Fig. 6 is a line graph illustrating the discharge voltages and mid-value voltages of Examples 1-5 and References 1-3 at - 10 °C under different discharge currents.

### DETAILED DESCRIPTION

It will be appreciated by those of ordinary skill in the art that the invention can be embodied in other specific forms without departing from the spirit or essential character thereof. The presently disclosed embodiments are therefore considered in all respects to be illustrative and not restrictive.

A first embodiment of the present invention discloses using a polyethylene terephthalate (PET) film as the substrate, apply an organic polymeric film on the surface of the PET film to reduce apertures on the film. Additionally, a plasticizer may be added in preparation of an organic transparent solution (comprising an organic solvent and an organic polymeric material) to uniformly distribute the apertures in producing a composite separator film.

In another embodiment, with the PET film as the substrate, the organic polymeric film is applied on both sides of the PET film to provide a composite separator film, the organic polymeric film having particularly a thickness of about 0.2 to 10 microns and a concentration of the organic polymeric material in the organic solvent of about 1 to 20 % by weight. Since the coating is transparent, it is most likely that there are no suspended particles so the coating can be easily and uniformly applied. To further improve porosity of the composite separator film, certain amounts of plasticizer may be added to the organic transparent solution, the amount of plasticizer to organic polymer material having a ratio of about 2 : 1 to 2 : 5 (by weight).

In one example, the organic polymeric material is able to withstand temperatures of about 170 to 500 °C with a heat shrinkage rate of about 0 to 5 %. The organic polymeric material includes one or more of the following: polypropylene (PP), polyethylene (PE), ethylene-vinyl acetate copolymer (EVA), polyvinyl alcohol (PVA), polyvinylpyrrolidone (PVP), polyvinylidene fluoride (PVDF), poly(vinylidene fluoride)-hexafluoropropene (PVDF-HFP), polymethyl methacrylate (PMMA), and mixtures thereof.

Likewise, the organic solvent for dissolving the organic polymeric material includes one or more of the following: butanone, butanol, acetone, acetic acid, tetrahydrofuran (THF), dimethylformamide (DMF), dimethylacetamide (DMAC), dimethyl sulfoxide (DMSO), hexamethyl phosphoramide (HMPA), N-methylpyrrolidone (NMP), triethyl phosphate (TEP), trimethyl phosphate (TMP), tetramethyl urea (TMU), and mixtures thereof.

The plasticizer includes one or more of the following: dimethyl carbonate (DMC), diethyl carbonate (DEC), propylene carbonate (PC), butanediol, dibutyl phthalate (DBP), and mixtures thereof.

The method of preparing the composite separator film involves dissolving the organic polymeric material in the organic solvent to provide a transparent coating solution. The coating solution can subsequently be applied to the surfaces of the PET film, dried and cutd to produce the desired composite separator film.

The methods of applying the coating to the film can utilize techniques known by one skilled in the art including without limitation printing, rolling, scraping, dipping, spraying and pulling.

Another embodiment discloses a lithium-ion battery having cathode, anode, composite separator film, and an electrolytic solution. The cathode, anode and composite separator film can be formed into a cell core using known techniques including without limitation wounding, rolling and stacking into layers. The cell core can be housed within a battery cover, injected with the electrolytic solution, and tightly sealed to produce the desired battery. The electrolytic solution and battery core can utilize materials known by one skilled in the art including hard shells such as steel shells or flexible packaging shells. The methods of preparing the solution and shell can incorporate known processes and will not be further elaborated herein.

The presently disclosed lithium-ion battery with the disclosed composite separator film embodiments can be subjected to electrochemical performance testing at room temperature and low temperatures. The results below will demonstrate the disclosed embodiments having enhanced electrical performance with higher capacity and charge/discharge rate at various current densities and at low temperatures. Furthermore, the batteries were also subjected to high temperature testing. Likewise, the batteries exhibited enhanced thermal properties compared to reference samples. The following describes the various embodiments of the composite separator films and methods of preparation thereof in more detail.

EXAMPLE 1

(1) Preparation of the separator film

Take 2 grams of PVDF powder, the PVDF being heat resistant up to a temperature of about 170 °C with heat shrinkage rate of 3 %, dissolve in 40 grams of organic solvent, add 1.5 grams of plasticizer, and completely dissolve and uniformly mix the solution at 50 °C to provide an organic transparent solution. Next, apply the solution to both sides of a PET film, dry to provide a composite separator film with thickness of about 2 microns.

(2) Preparation of the battery

(A) Preparation of the cathode

Dissolve 30 grams of PVDF in 450 grams of NMP to provide a binder solution. Next, add a uniform mixture of 940 grams LiCoO₂ and 30 grams acetylene black powder into the solution, mix thoroughly and uniformly to provide cathode slurry. Mechanically apply the slurry uniformly onto both sides of an 18 micron thick aluminum foil for a coating thickness of about 0.155 mm. Bake the cathode film in an oven at 100 °C for 5 hours and apply pressure to provide a 0.135 mm thick cathode film.
Cut film to a length of 550 mm and width of 44 mm such that each cathode film contains 7.9 grams of LiCoO₂.

(B) Preparation of the anode

Mix 950 grams of graphite, 20 grams of carbon fiber, and 30 grams of styrene butadiene rubber (SBR) into 1500 mL of water to provide anode slurry. Mechanically apply the slurry uniformly onto both sides of an 18 micron thick copper foil. After 125 °C of vacuum heating for one hour, the film can be rolled and cutd to a length of 515 mm and width of 45 mm such that each anode film contains 3.8 grams of graphite.

(C) Battery assembly

Take the cathode, composite separator, and anode films from above, stack in the order listed and wound into a 5.7 x 42.0 x 117.0 mm³ of flexible cell core. Take polymer film and metal foil with PP/Al (aluminum foil)/PP or PE composite films and form a 5.7 x 42.0 x 117.0 mm³ of outer shell with corresponding recess, and place the cell core within the shell. Add lithium salt LiPF₆ at a concentration of 1 mol / L into a 1 : 1 volume ratio of ethylene carbonate and dimethyl carbonate in a mixed solvent to form a non-aqueous electrolyte. Inject the electrolyte at 3.8 g / Ah into the cell core and activate the cell core's electrical properties. After forming the battery, the voltage will not be less than 3.85 volts and the flexible packaged battery has a dimension of 6.0 x 43.0 x 122.0 mm³. Repeat process to provide 50 batteries.

EXAMPLE 2

Same in all respect to EXAMPLE 1 except that in the preparation of the separator film, no plasticizer is used.

EXAMPLE 3

Same in all respect to EXAMPLE 1 except that in the preparation of the separator film, the solution is applied to only one side of the PET film instead of both sides.

EXAMPLE 4

Same in all respect to EXAMPLE 1 except that in the preparation of the separator film, PVA (heat resistant up to about 240 °C with heat shrinkage rate of 5 %) is used instead of PVDF powder.

EXAMPLE 5

Same in all respect to EXAMPLE 1 except that in the preparation of the separator film, PMMA (heat resistant up to about 210 °C with heat shrinkage rate of 4 %) is used instead of PVDF powder.

REFERENCE 1

(1) Preparation of the separator film

Use a 25 micron thick tri-layer PP/PE/PP as the composite separator film.

(2) Preparation of the battery

(A) Preparation of the cathode

Dissolve 30 grams of PVDF in 450 grams of NMP to provide a binder solution. Next, add a uniform mixture of 940 grams LiCoO₂ and 30 grams acetylene black powder into the solution, mix thoroughly and uniformly to provide cathode slurry. Mechanically apply the slurry uniformly onto both sides of an 18 micron thick aluminum foil for a coating thickness of about 0.155 mm. Bake the cathode film in an oven at 100 °C for 5 hours and apply pressure to provide a 0.135 mm thick cathode film. Cut film to a length of 550 mm and width of 44 mm such that each cathode film contains 7.9 grams of LiCoO₂.

(B) Preparation of the anode

Mix 950 grams of graphite, 20 grams of carbon fiber, and 30 grams of styrene butadiene rubber (SBR) into 1500 mL of water to provide anode slurry. Mechanically apply the slurry uniformly onto both sides of an 18 micron thick copper foil. After 125 °C of vacuum heating for one hour, the film can be rolled and cutd to a length of 515 mm and width of 45 mm such that each anode film contains 3.8 grams of graphite.

(C) Battery assembly

Take the cathode, composite separator, and anode films from above, stack in the order listed and wound into a 5.7 x 42.0 x 117.0 mm³ of flexible cell core. Take polymer film and metal foil with PP/Al (aluminum foil)/PP or PE composite films and form a 5.7 x 42.0 x 117.0 mm³ of outer shell with corresponding recess, and place the cell core within the shell. Add lithium salt LiPF₆ at a concentration of 1 mol / L into a 1 : 1 volume ratio of ethylene carbonate and dimethyl carbonate in a mixed solvent to form a non-aqueous electrolyte. Inject the electrolyte at 3.8 g / Ah into the cell core and activate the cell core's electrical properties. After forming the battery, the voltage will not be less than 3.85 volts and the flexible packaged battery has a dimension of 6.0 x 43.0 x 122.0 mm³. Repeat process to provide 50 batteries.

REFERENCE 2

Same in all respect to REFERENCE 1 except that in the preparation of the separator film, a single layer PET film is used instead of the tri-layer PP/PE/PP.

REFERENCE 3

Same in all respect to REFERENCE 1 except that in the preparation of the separator film, an inorganic PET film from Degussa Co., Ltd. is used instead of the tri-layer PP/PE/PP.

PERFORMANCE TESTING OF EXAMPLES 1-5 and REFERENCES 1-3

(1) Performance testing of flexible batteries Examples 1-5 and References 1-3 at different temperatures and under different discharge rates

Separately at 25 °C, -20 °C, and - 10 °C, each battery is charged using 1 C of constant current capped at a threshold voltage of 4.2 V. Subsequently, the batteries are discharged at different rates of 0.5 C, 1 C, 5 C, 8 C, 10 C and 15 C with a discharge threshold of 2.75 V.

(2) Thermal testing of flexible batteries Examples 1-5 and References 1-3 at 170 °C

Charge each battery at 1 C up to 4.2 V. Within an oven and at a heating rate of 5 ± 2 °C per minute, the batteries are heated up to 170 °C and maintained for an hour. Observations are made to see if the battery is able to maintain 170 °C for 60 minutes without exploding, burning and signs of smoking or charring.

TEST RESULTS

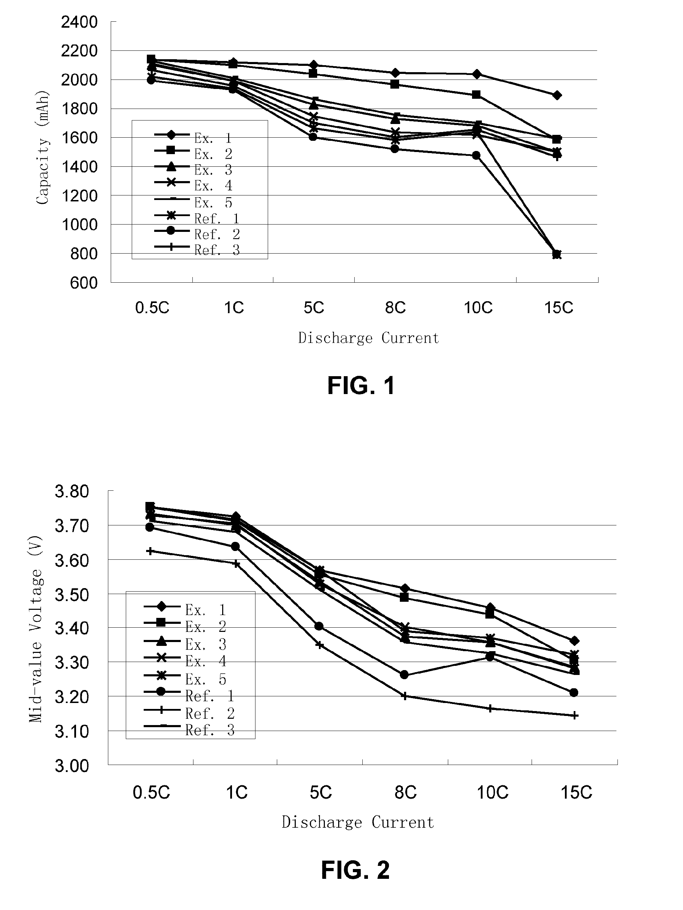

Numerical averages for all test results of Examples 1-5 and References 1-3 are shown in Tables 1-7 and Figures 1-6.

Table 1 shows the test results of the battery's capacity for Examples 1-5 and References 1-3 at room temperature.

**TABLE 1. Battery capacity of Examples 1-5 and References 1-3 at room temperature.**

| **Sample** | **Capacity (mAh)** |
|---|---|
| Example 1 | 2137 |
| Example 2 | 2133 |
| Example 3 | 2088 |
| Example 4 | 2100 |
| Example 5 | 2123 |
| Reference 1 | 2020 |
| Reference 2 | 1987 |
| Reference 3 | 2066 |

From the results in Table 1, the flexibly packaged batteries using the presently disclosed composite separator film embodiments have higher capacities. Specifically, the addition of plasticizers and application of the organic polymer film coating on both sides of the composite separator film yielded the highest performance as seen in Example 1. Because a single-layer PET film has generally larger apertures disposed about the surface, it is less conducive in functioning as a separator film for lithium-ion batteries, thus yielding the lowest capacity as seen in Reference 2. Likewise, inorganic coatings of PET film did not perform as well and may be due to the thickness of the coating, which may have occupied some volume within the battery. Under similar conditions, batteries with composite PET separator films using inorganic coatings have lower capacity than those using organic polymer coatings. Furthermore, the addition of plasticizers further reduces the sizes of pores on the PET film thus leading to more uniform distribution of apertures about the PET separator films. Accordingly, the presently disclosed embodiments of composite PET separator films with plasticizers and organic polymers are able to provide batteries with higher capacity.

Table 2 shows the test results of the battery's different discharge rates for Examples 1-5 and References 1-3 at room temperature.

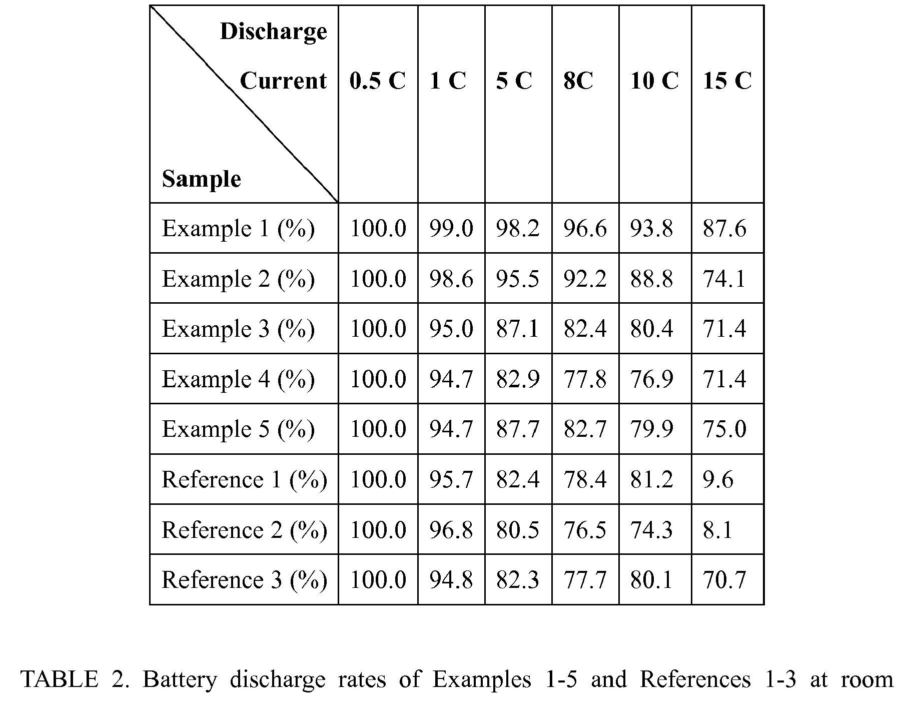

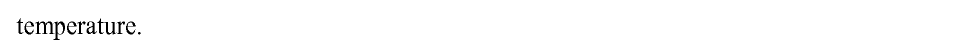

From the results in Table 2, the flexibly packaged batteries using the presently disclosed embodiments of composite separator films have higher discharge rates. Specifically, the addition of plasticizers and application of the organic polymer film coating on both sides of the composite separator film yielded the highest performance as seen in Example 1. Because a single-layer PET film has generally larger apertures disposed about the surface, it is less conducive in functioning as a separator film for lithium-ion batteries, thus yielding the poor discharge rates as seen in Reference 2. Additionally, PET films with inorganic coating may have produced better discharge rates at high discharge current than traditional PET films, but the presently disclosed composite separator film with organic coating yielded generally better discharge rates at both low and high discharge currents, even better than both traditional PET films and PET films with inorganic coating. Furthermore, the performance of PVDF organic polymer coated PET film yielded the highest performance at 15 C discharge current with a discharge rate of 87.6 %, which is by far the most superior among all samples.

Reference is now made to Fig. 1 showing the discharge capacity and discharge rates of Examples 1-5 and References 1-3 at room temperature under different discharge currents. Likewise, Fig. 2 illustrates the discharge voltages and mid-value voltages of Examples 1-5 and References 1-3 at room temperature under different discharge currents. Both figures demonstrate enhanced electrical performance of using the presently disclosed composite separator film with plasticizers and organic polymeric coatings, especially at higher discharge currents. Specifically, the performance of PVDF organic polymer coated PET film yielded the highest performance at 15 C discharge current with a mid-value voltage of 3.36 V, which is by far the most superior among all samples and is able to satisfy the demands and requirements of high performing lithium-ion batteries.

Table 3 shows the test results of the battery's capacity for Examples 1-5 and References 1-3 at-20°C.

**TABLE 3. Battery capacity of Examples 1-5 and References 1-3 at - 20 °C.**

| **Sample** | **Capacity (mAh)** |
|---|---|
| Example 1 | 1193 |
| Example 2 | 1123 |
| Example 3 | 1050 |
| Example 4 | 1176 |
| Example 5 | 1147 |
| Reference 1 | 1001 |
| Reference 2 | 992 |
| Reference 3 | 1133 |

From the results in Table 3, the flexibly packaged batteries using the presently disclosed composite separator film embodiments still have higher capacities at - 20 °C. Specifically, the addition of plasticizers and application of the organic polymer film coating on both sides of the composite separator film yielded the highest performance as seen in Example 1. And although PET films with inorganic coating may have demonstrated enhanced capacity over traditional PET films, it is still generally worse than the presently disclosed composite separator film with organic coating. As such, batteries utilizing the presently disclosed composite separator film embodiments will exhibit better discharge capacity even at low temperatures.

Table 4 shows the test results of the battery's different discharge rates for Examples 1-5 and References 1-3 at - 20 °C.

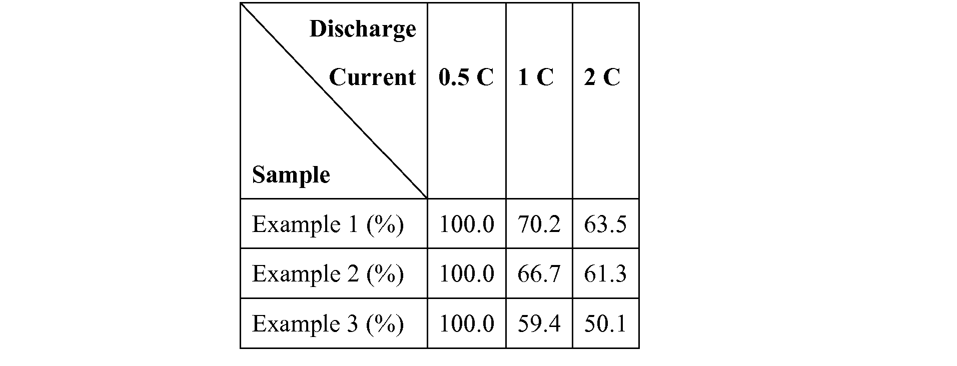

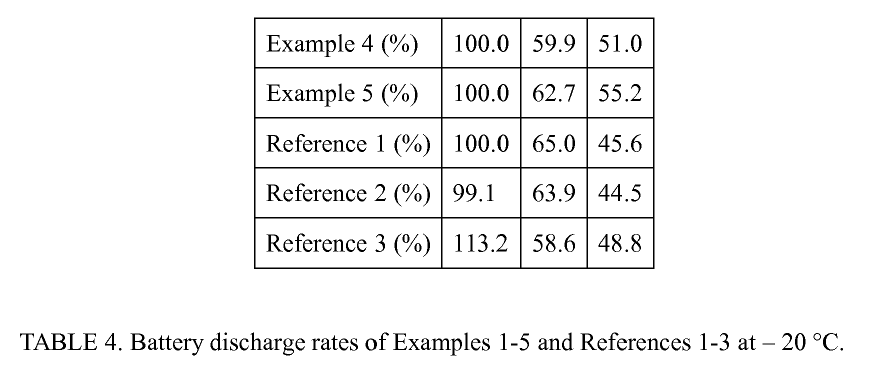

From the results in Table 4, the flexibly packaged batteries using the presently disclosed embodiments of composite separator films have higher discharge rates even at - 20 °C. Specifically, the addition of plasticizers and application of the organic polymer film coating on both sides of the composite separator film yielded the highest performance as seen in Example 1. And although PET films with inorganic coating showed improvement in discharge rate over that of traditional PET films, it is still less than the presently disclosed composite separator film with organic coating, which yielded generally better discharge rates at both low and high discharge currents. As such, batteries utilizing the presently disclosed composite separator film embodiments will exhibit better discharge rates even at low temperatures.

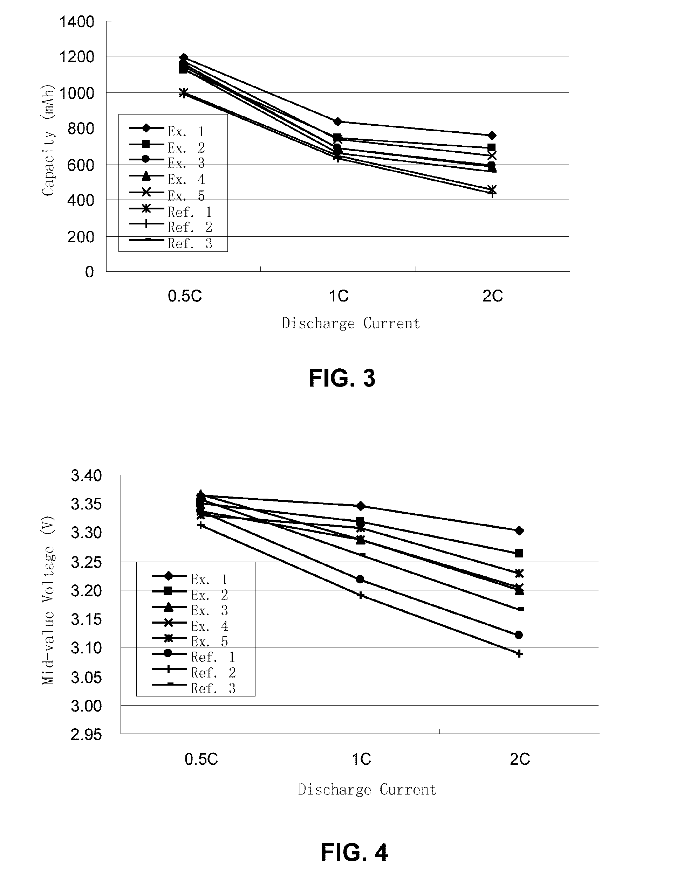

Reference is now made to Fig. 3 showing the discharge capacity and discharge rates of Examples 1-5 and References 1-3 at - 20 °C under different discharge currents. Likewise, Fig. 4 illustrates the discharge voltages and mid-value voltages of Examples 1-5 and References 1-3 at - 20 °C under different discharge currents. Both figures demonstrate enhanced electrical performance of using the presently disclosed composite separator film with plasticizers and organic polymeric coatings.

Table 5 shows the test results of the battery's capacity for Examples 1-5 and References 1-3 at - 10 °C.

**TABLE 5. Battery capacity of Examples 1-5 and References 1-3 at - 10 °C.**

| **Sample** | **Capacity (mAh)** |
|---|---|
| Example 1 | 1565 |
| Example 2 | 1540 |
| Example 3 | 1472 |
| Example 4 | 1550 |
| Example 5 | 1489 |
| Reference 1 | 1418 |
| Reference 2 | 1362 |
| Reference 3 | 1448 |

From the results in Table 5, the flexibly packaged batteries using the presently disclosed composite separator film embodiments still have higher capacities at -10 °C. Specifically, the addition of plasticizers and application of the organic polymer film coating on both sides of the composite separator film yielded the highest performance as seen in Example 1. And although PET films with inorganic coating may have demonstrated enhanced capacity over traditional PET films, it is still generally worse than the presently disclosed composite separator film with organic coating. As such, batteries utilizing the presently disclosed composite separator film embodiments will exhibit better discharge capacity even at low temperatures.

Table 6 shows the test results of the battery's different discharge rates for Examples 1-5 and References 1-3 at - 10 °C.

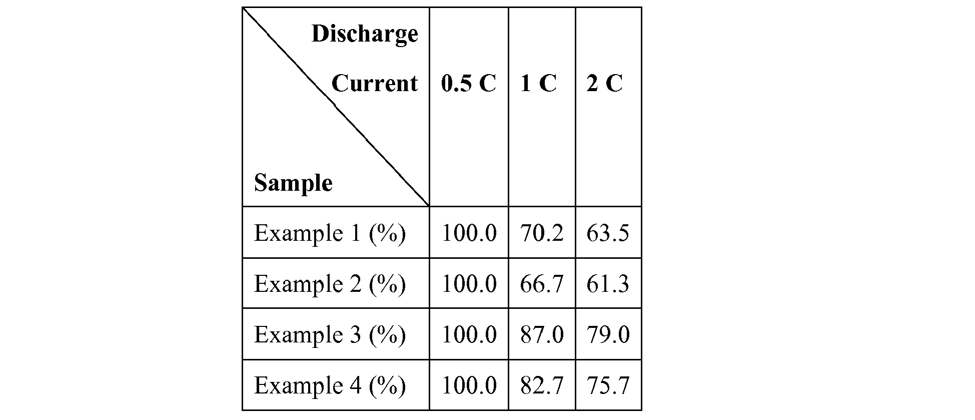

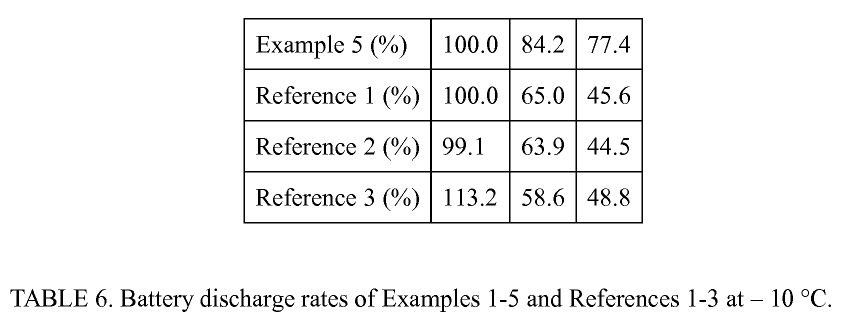

From the results in Table 6, the flexibly packaged batteries using the presently disclosed embodiments of composite separator films have higher discharge rates even at - 10 °C. Specifically, the addition of plasticizers and application of the organic polymer film coating on both sides of the composite separator film yielded the highest performance as seen in Example 1. And although PET films with inorganic coating showed improvement in discharge rate over that of traditional PET films, it is still less than the presently disclosed composite separator film with organic coating, which yielded generally better discharge rates at both low and high discharge currents. As such, batteries utilizing the presently disclosed composite separator film embodiments will exhibit better discharge rates even at low temperatures.

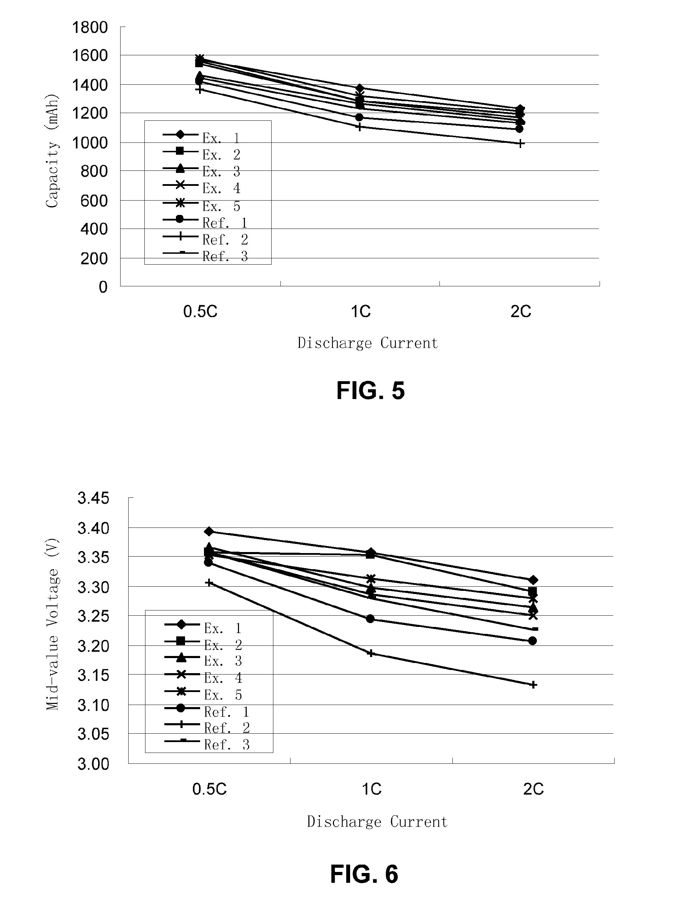

Reference is now made to Fig. 5 showing the discharge capacity and discharge rates of Examples 1-5 and References 1-3 at - 10 °C under different discharge currents. Likewise, Fig. 6 illustrates the discharge voltages and mid-value voltages of Examples 1-5 and References 1-3 at - 10 °C under different discharge currents. Both figures demonstrate enhanced electrical performance of using the presently disclosed composite separator film with plasticizers and organic polymeric coatings.

Table 7 shows the thermal test results of Examples 1-5 and References 1-3 at 170 °C.

**TABLE 7. Thermal results of Examples 1-5 and References 1-3 at 170 °C.**

| Sample | Observation | Result |
|---|---|---|
| Example 1 | All parts qualified | All parts acceptable |
| Example 2 | 2/50 suffered broken shell | Mostly acceptable |
| Example 3 | 10/50 suffered broken shell | Mostly acceptable |
| Example 4 | All parts qualified | All parts acceptable |
| Example 5 | All parts qualified | All parts acceptable |
| Reference 1 | All parts burnt and melted | All parts unacceptable |
| Reference 2 | 30/50 burnt and melted | Some parts acceptable |
| Reference 3 | 3/50 burnt and melted | Mostly acceptable |

From the results in Table 7, the flexibly packaged batteries using the presently disclosed embodiments of composite separator films have enhanced thermal properties and therefore safer batteries. Specifically, the addition of plasticizers and application of the organic polymer film coating on both sides of the composite separator film yielded the highest performance as seen in Example 1. The multiple broken shells observed in Example 3 are most likely due to the poor adhesion of the coating to only one side of the PET film. Accordingly, these batteries exhibited poor thermal properties. In contrast, the other embodiments of coating on both sides of the PET film exhibited better adhesion and therefore are able to provide high-temperature high-performing batteries as seen in Examples 2, 4 and 5.

Presently disclosed embodiments utilize single-layer PET films have melting points of about 256 to 265 °C and can therefore provide stability at high temperatures. The films are also thin and can meet the immediate demands for high energy, capacity, and current density without disrupting the high voltage requirements. The application of organic polymeric coating materials on both sides of the PET film provides a composite separator film having uniformly distributed pore sizes and porosity with improved control. In doing so, the composite separator film is able to meet high thermal requirements with improved battery safety. The addition of the plasticizers to the transparent coating solution further enhances the performance of the composite separator film.

The presently disclosed composite separator films also have high absorption capabilities and are able to absorb the electrolytic solutions in improving the battery's cycling characteristics. The processes of fabricating the composite separator films are relatively easy to manufacture and replicate with machines that can uniformly apply coatings on one or both sides of the PET film. Accordingly, batteries utilizing the presently disclosed composite separator film embodiments will exhibit better electrical properties like capacity and discharge rates whether at high or low temperatures. Furthermore, they will also demonstrate better thermal properties than traditional PET films.

Although the invention has been described in detail with reference to several embodiments, additional variations and modifications exist within the scope and spirit of the invention as described and defined in the following claims.

## Claims

1. A composite separator film for lithium-ion batteries comprising:
a polyethylene terephthalate substrate; and
at least one layer of organic polymeric film disposed on the substrate, the organic polymeric film having at least one organic polymeric material capable of withstanding temperatures of at least about 170 °C, preferably temperatures from about 170°C to 500 °C, with shrinkage rates of about 0 to 5 % upon raising the temperature above 170 °C, preferably upon raising the temperature to a temperature from 170 °C to 500 °C.

2. The film of claim 1, wherein a first layer of organic polymeric film is disposed on a top side of the substrate and a second layer of organic polymeric film is disposed on a bottom side of the substrate.

3. The film of claim 1 or 2, wherein the organic polymeric material can be selected from the group consisting of polypropylene (PP), polyethylene (PE), ethylene-vinyl acetate copolymer (EVA), polyvinyl alcohol (PVA), polyvinylpyrrolidone (PVP), polyvinylidene fluoride (PVDF), poly(vinylidene fluoride)-hexafluoropropene (PVDF-HFP), polymethyl methacrylate (PMMA), and mixtures thereof.

4. The film of any one of claims 1 to 3, wherein the thickness of the organic polymeric film is about 0.2 to 10 microns.

5. The film of any one of claims 1 to 4, wherein the polyethylene terephthalate substrate has multiple apertures, the sizes of the apertures ranging from about 0.01 to 1.0 microns.

6. The film of any one of claims 1 to 5, wherein the thickness of the polyethylene terephthalate substrate is about 10 to 100 microns.

7. A method of forming a composite separator film for lithium-ion batteries, the method comprising:
providing a polyethylene terephthalate substrate;
applying a transparent solution on at least one surface of the substrate, the solution comprising an organic polymeric material dissolved in an organic solvent; and
drying and cutting the substrate to provide the composite separator film.

8. The method of claim 7, wherein the amount of organic polymeric material within the transparent solution is about 1 to 20 % of the total weight of the solution.

9. The method of claim 7 or 8, wherein the organic solvent can be selected from the group consisting of butanone, butanol, acetone, acetic acid, tetrahydrofuran (THF), dimethylformamide (DMF), dimethylacetamide (DMAC), dimethyl sulfoxide (DMSO), hexamethyl phosphoramide (HMPA), N-methylpyrrolidone (NMP), triethyl phosphate (TEP), trimethyl phosphate (TMP), tetramethyl urea (TMU), and mixtures thereof.

10. The method of any one of claims 7 to 9, further comprising adding plasticizers to the solution, preferably the ratio of the plasticizer to organic polymeric material in the solution is about 2 : 1 to 2 : 5 by weight, or preferably the plasticizer can be selected from the group consisting of dimethyl carbonate (DMC), diethyl carbonate (DEC), propylene carbonate (PC), butanediol, dibutyl phthalate (DBP), and mixtures thereof.

11. A lithium-ion battery comprising:
a cathode terminal;
an anode terminal;
electrolytic solution; and
a composite separator film for dividing the terminals, the film comprising:
a polyethylene terephthalate substrate; and
at least one layer of organic polymeric film disposed on the substrate, the organic polymeric film having at least one organic polymeric material capable of withstanding temperatures of at least about 170 °C, preferably temperatures from about 170°C to 500 °C, with shrinkage rates of about 0 to 5 % upon raising the temperature above 170 °C, preferably upon raising the temperature to a temperature from about 170 °C to 500 °C.

12. The battery of claim 11, wherein a first layer of organic polymeric film is disposed about a top side of the substrate and a second layer of organic polymeric film is disposed about a bottom side of the substrate.

13. The battery of claim 11 or 12, wherein the organic polymeric material can be selected from the group consisting of polypropylene (PP), polyethylene (PE), ethylene-vinyl acetate copolymer (EVA), polyvinyl alcohol (PVA), polyvinylpyrrolidone (PVP), polyvinylidene fluoride (PVDF), poly(vinylidene fluoride)-hexafluoropropene (PVDF-HFP), polymethyl methacrylate (PMMA), and mixtures thereof.

14. The battery of any one of claims 11 to 13, wherein the thickness of the organic polymeric film is about 0.2 to 10 microns.

15. The battery of any one of claims 11 to 14, wherein the polyethylene terephthalate substrate has multiple apertures, the sizes of the apertures ranging from about 0.01 to 1.0 microns, preferably the polyethylene terephthalate substrate has a thickness of about 10 to 100 microns.
